# EUROPEAN PATENT SPECIFICATION

(11) **EP 1 614 523 B1**
(45) Date of publication and mention of the grant of the patent: **13.06.2007**
(21) Application number: 04015742.2
(22) Date of filing: 05.07.2004
(51) Int. Cl.: B29C 47/20, B29C 47/24

(54) **Spiral die assembly**
Spiraldüse
Filière en spirale

(43) Date of publication of application: 11.01.2006
(73) Proprietor: YAMAGUCHI MFG. WORKS, LTD., Yokohama-shi, Kanagawa (JP)
(72) Inventor: Nagai, Toshiaki, c/o Yamaguchi Mfg. Works, Ltd., Yokohama-shi, Kanagawa (JP); Masaki, Mikiyasu, c/o Yamaguchi Mfg. Works, Ltd., Yokohama-shi, Kanagawa (JP); Yamaguchi, Shigejiro, Yamaguchi Mfg. Works, Ltd., Yokohama-shi, Kanagawa (JP)
(74) Representative: Klocke, Peter

(56) References cited:
- JP-A- 63 179 724
- PATENT ABSTRACTS OF JAPAN vol. 1997, no. 09, 30 September 1997 (1997-09-30) -& JP 09 136344 A (SEKISUI CHEM CO LTD), 27 May 1997 (1997-05-27)
- PATENT ABSTRACTS OF JAPAN vol. 1998, no. 13, 30 November 1998 (1998-11-30) -& JP 10 202721 A (SEKISUI CHEM CO LTD), 4 August 1998 (1998-08-04)

## Description

### BACKGROUND OF THE INVENTION

### 1. Field of the Invention

The present invention relates to a spiral die assembly suitable for forming tubular body by an extrusion molding.

### 2. Brief Description of the related Art

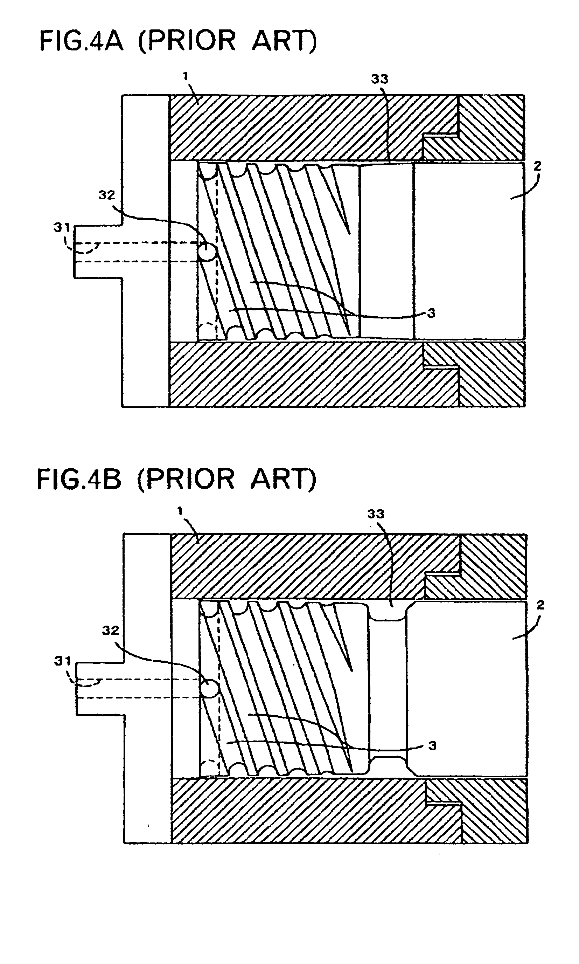

In conventional extrusion molding methods for forming tubular bodies, a spider die which frequently causes spider marks and a straight die which tends to cause uneven thickness in molded products are not employed, but spiral die assemblies as shown in FIGs.4A and 4B are employed instead. In such a spiral die assembly a spiral groove 3 is formed on the outer surface of a mandrel 2 which is inserted in a main body 1 of the die assembly. Molten resin supplied from an extruder is usually introduced into the mandrel via an inlet 31 and divided its flow path into two to eight flow paths at a dividing inlet 32, and finally moved to a die lip (rightmost end of FIG.4A or 4B) via the spiral groove 3. Depth of the spiral groove 3 is gradually decreasing toward the die lip. Portion of molten resin is moved between the inner surface of the main body 1 and the mandrel 2 as molten resin being moved in the spiral groove 3 and its flow is adjusted in a reserving portion 33 (see FIG.4B) and a straight portion (a land portion: a rip gap portion), so that molten resin reaches to the die lip in an adjusted flow. Sometimes, a spiral die assembly having no reserving portions (see FIG.4A) is used depending on products to be molded.

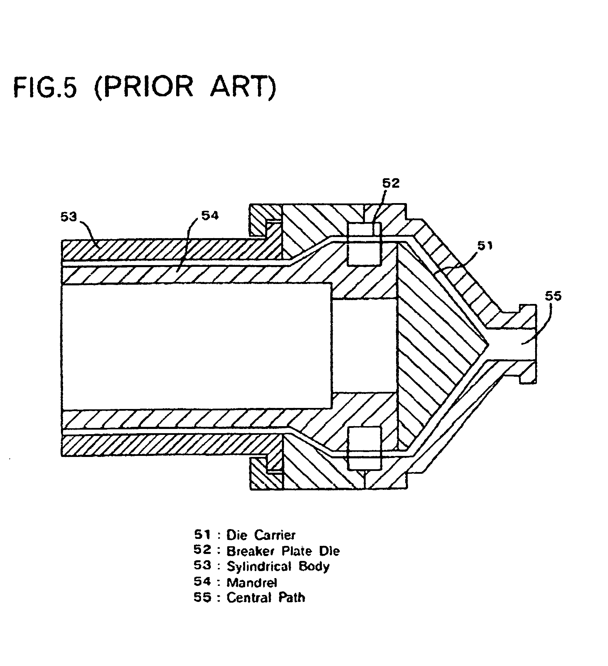

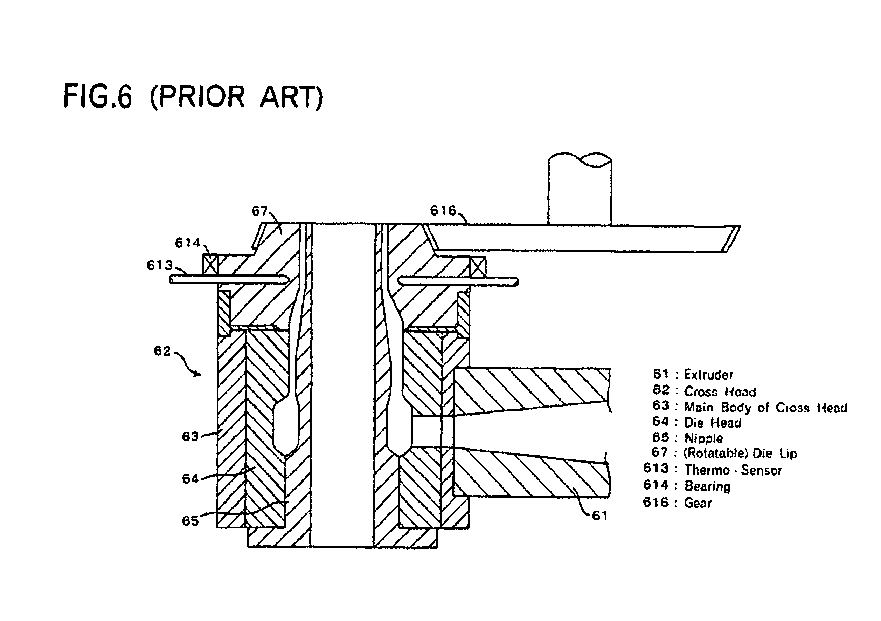

Except the above-mentioned spiral die assemblies, various dies have been proposed in order to homogenize molten resin at the outlet of the die lip.
1) When a porous pipe is formed out of high viscous material, the material between a cylinder and a mandrel is heated by frictional force in order to disperse strands after passing a breaker plate or in order to adhere and to polymerize powdered material. The frictional heat is obtained by rotating the cylinder. The Japanese laid open patent No. 8-57936 (reference 1) discloses a die arrangement such that a die for extrusion molding and a molded product can be relatively rotated (see FIG.5). The relative rotation is continuously or intermittently executed and is controlled its rotational mode and degree of the rotation so as to control properties of the molded products.
2) The Japanese laid open patent No. 59-9035 (reference 2) discloses a method to modify a thickness of an extruded pipe by controlling a gap between a die and a rotatable eccentric nipple (mandrel) and also controlling a detected temperature difference in a circumferential direction. In the extruder for forming the pipe, a cross head 62 in which a resin passage between a die 64 and a nipple 65 is eccentrically arranged except at the end of the resin passage (see FIG.6) and a sensor is arranged to detect temperature of molten resin in the radial direction. The die and the nipple are arranged such that either one of them can be rotated around an axis for preventing uneven thickness in the extruded product.
3) The Japanese laid open patent No. 10-29237 (reference 3) discloses a molding method for forming laminated products out of different materials. Distributed and leaked different materials from spiral grooves can be laminated in a predetermined order by rotating a mandrel equipped with the spirals (see FIG.7). Japanese patent JP 63179724 shows a rotatable cylinder (of a certain length, forming a section of the inner surface of the main body).

Usually in a die assembly, a molten resin flow along the inner surface of the cylinder (hereinafter referred as "land flow") and molten resin flows in spiral grooves (hereinafter referred as "spiral flow") are moved to a die lip as a flow ratio between the two molten resin flows being kept in a fixed balance. This fixed balance is very important in order to keep good appearance in the molded pipes. When the balance breaks, defects such as streak, uneven appearance, uneven thickness, uneven strength and the like appear in the molded pipes.

An appropriate balance between the land flow and the spiral flow is empirically determined according to a width of the spiral groove, a depth of the groove, a pitch of the groove and the like. And the appropriate balance is also varied according to a flow rate, a temperature, a visco-elasticity of molten resin and the like. When the balance is varied, weld marks are frequently formed in the molded products, since proper measures against such varied balance are not established. Sometimes molten resin is kneaded in order to eliminate weld marks by raising the temperature and lowering the visco-elasticity of molten resin, but uneven thickness, contamination (die marks etc.) due to thermal degradation of the molten resin and like are caused.

A round die or a flat die is used in the extruder for forming molten and kneaded resin into a desired shape.

A pipe body such as film, pipe, blown container, net and the like are formed through the round die. Performance of the die for distributing molten resin uniformly around a circumference on an imaginary plane, affects quality of the pipe body, except molding asymmetrical product out of molten resin extruded from the die lip. When the molten resin is not distributed uniformly or homogeneously around the circumference, the following defects are caused: (a) uneven thickness, (b) deteriorated appearance (weld mark, streak, unevenness, wrinkle and so forth), (c) dispersion in strength, (d) dispersion in electrical properties, and the like. In addition, the round die has the following problems: difficulty to substitute remaining resin in the groove with different type of new resin, to require a considerable time and a considerable amount of wasted resin for substituting resins.

Since visco-elasticity of molten resin in the die depends on its temperature and pressure, and varies according to its flow rate, a molten resin flow in the die should be controlled variably. But the molten resin flow in a straight portion (land portion) near the die lip should be controlled by a fixed means in order to attain stable and straight flow.

The weld mark (weld line) mentioned in (b) means a fine line appearing in the extruded pipe, in other words "a streaked state" when molten resin being flowed in the grooves are combined but not mixed homogeneously.

These problems cannot be solved in the above-mentioned prior arts (spiral dies shown in FIGs.4A and 4B and references 1 to 3).

### SUMMARY OF THE INVENTION

The present invention as claimed is carried out in view of the above-mentioned prior arts in order to obtain a homogeneous pipe body, an inflation film with/without drawing and a functional film by dispersing molten resin homogeneously and in order to provide a spiral die capable of being applied to various molten resins and extruding conditions.

According to the present invention a spiral die assembly constituted in the following manner can obtain a homogeneous pipe body, an inflation film with/without drawing and a functional film by dispersing molten resin homogeneously, and the spiral die assembly is capable of being applied to various molten resins and extruding conditions. The spiral die assembly comprises a main body of said spiral die assembly, a mandrel having a spiral groove around its outer surface inserted in the inside of the main body and a rotatable ring having a desired width fitted along the outer surface of the spiral groove and fitted in a portion of a die cylinder which forms the inner surface of the main body in a range corresponding to both ends of the spiral groove.

In detail the rotatable ring has a desired width fitted along the outer surface of the spiral groove and is fitted in a portion of a die cylinder which forms the inner surface of the main body in a range corresponding to both ends of the spiral groove. Preferably molten resin is leaked into sliding gaps between the rotatable ring and the main body in order to function as a lubricant. Additionally a discharging mechanism is provided having passages and a needle valve for controlling amount of the molten resin to be discharged out of the spiral die assembly via the passages.

According to a further embodiment the rotatable ring is controlled to rotate at a rate less than 60 rpm.

According to another embodiment the inner surface of the rotatable ring is finished so as to have a mirror grade in a range between 0.1S and 6.3S by the Japanese Industrial Standard 0601-1976, a satin finishing in a depth range between 4µm and 150µm or a tooth formed surface which can be parallel or spirally arranged. The above-referred value "0.1S" by the Japanese Industrial Standard, means that average distance between pairs of neighboring peaks of measured surface roughness of a molded product, is 0.1mm.

### BRIEF DESCRIPTION OF THE DRAWINGS

FIGs.1A and 1B are explanatory views illustrating an arrangement of the main portion of a spiral die assembly by the present invention. FIG.1A illustrates an engaging relation between a ratatable ring and pinions (small gears). FIG.1B is a sectional view of the spiral die assembly.
FIG.2 is a perspective view of the rotatable ring.
FIGs.3A, 3B and 3C explanatory views illustrating tooth formed examples of the inner surface of the rotatable ring.
FIGs.4A and 4B are sectional views illustrating conventional spiral die assemblies. FIG.4A shows a spiral die assembly having no reserving portion. FIG.4B shows a spiral die assembly having a reserving portion.
FIG.5 is a sectional view illustrating an arrangement of the main portion of the die by reference 1.
FIG.6 is a sectional view illustrating an arrangement of the main portion of the die by reference 2.

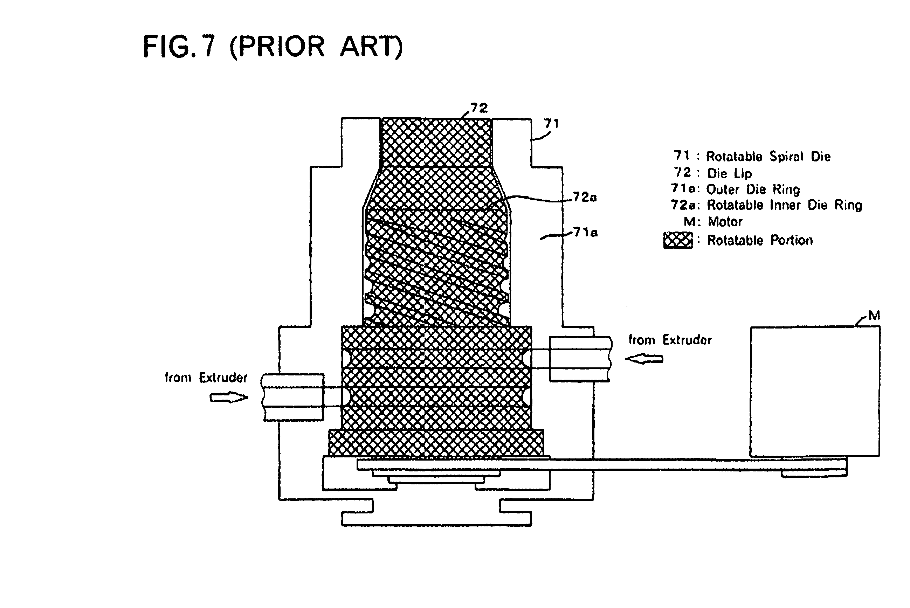

FIG.7 is a sectional view illustrating an arrangement of the main portion of the die by reference 3.
FIG.8 is a graph showing surface appearance (thickness fluctuation) of a molded film without rotating the rotatable ring.
FIG.9 is a graph showing surface appearance (thickness fluctuation) of a molded film by rotating the rotatable ring clockwise.
FIG.10 is a graph showing surface appearance (thickness fluctuation) of a molded film by rotating the rotatable ring counterclockwise.

### DETAILED DESCRIPTION OF THE PREFERRED EMBODIMENTS

Hereinafter embodied examples of the spiral die assembly by the present invention are explained as referring to the drawings.

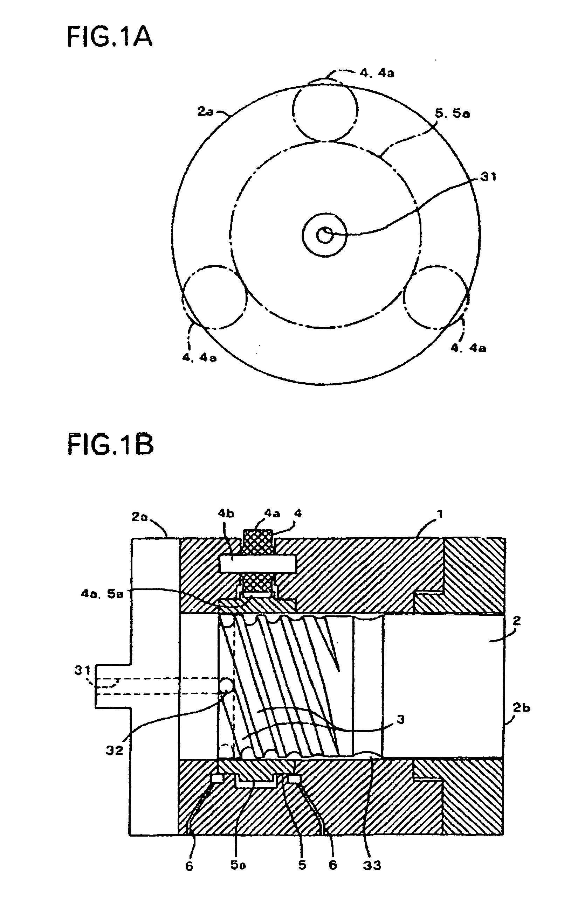

As shown in FIGs.1A and 1B, the spiral die assembly by the present invention suitable for forming a pipe body by an extrusion method, is constituted such that a mandrel 2 having a monolithically formed flange 2a and a spiral groove 3 on its outer surface, is pressed into the inside of a main body 1 of the spiral die assembly. A rotatable ring 5 with a desired width is rotatably arranged around the outer peripheral surface of the spiral groove in a portion of a die cylinder which forms the inside of the main body 1 of the spiral die assembly and also in a corresponding range between both ends of the spiral groove 3. The flange 2a is connected to an extruder (not shown) such that molten resin from the extruder flows into an inlet 31 and supplied to the spiral groove 3 via divided inlet 32.

As shown in FIG.1B the spiral groove 3 formed on the outer surface on the mandrel 2 gradually decreases its dept in a right side direction and is led to reserving portion 33 and a straight formed portion between the main body 1 of the spiral die assembly and the mandrel 2.

The rotatable ring 5 has a function to homogenize a molten resin flow by dispersing molten resin properly in a circumferential direction by selecting its rotating direction clockwise or counterclockwise and selecting a rotating rate depending on properties of the rein, extruding conditions and the like.

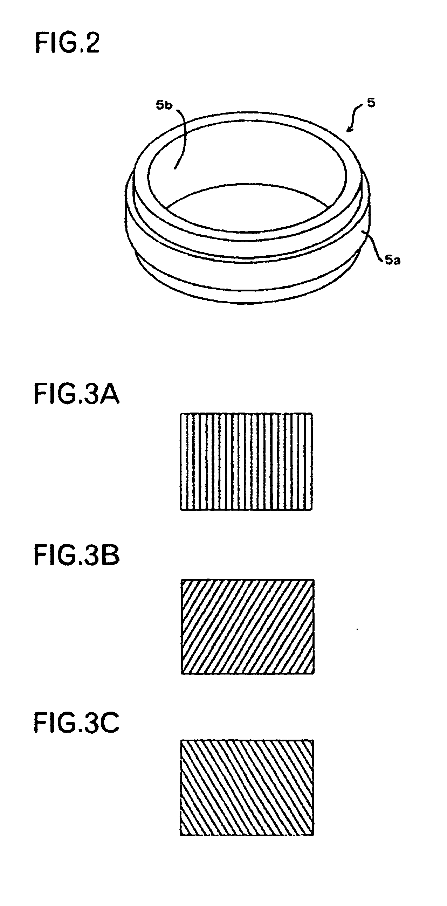

The rotatable ring 5 (can be rotatable in clockwise and counterclockwise directions) can be controlled under a rate of 60 rpm. An inner surface 5b (see FIG.2) of the rotatable ring 5 is finished so as to have a mirror grade finishing range between 0.1S and 6.3S preferably between 0.1S and 1.6S by the Japanese Industrial Standard (JIS B 0601-1976), a satin finishing with a depth range between 4µ and 150µ preferably between 4µ and 50µ or one of the tooth formed surfaces (parallel or spirally arranged: see FIGs.3A, 3B and 3C).

Surface roughness of the inner surface 5b of the rotatable ring 5 can be selected so as to obtain a proper degree of dispersion depending on properties of the molten resin, extruding parameters and the like.

As shown in FIG.2, the rotatable ring 5 has gear teeth 5a so that the rotatable ring 5 is formed as a gear. The gear teeth 5a are engaged with gear teeth 4a of three or more pinions (small gears) 4 which are fitted to the main body 1 of the spiral die assembly via axe 4b, so that the rotatable ring 5 can be rotated via pinions 4 (see FIGs.1A and 1B). A rotation axis of the rotatable ring 5 can be secured with good precision by arranging three or more pinions (small gears) 4.

One of the features of the spiral die assembly is characterized by that the reserving portion 33 is formed on the mandrel 2 having the spiral groove 3 between the end of the spiral groove 3 and the straight portion (land: lip gap) of a die lip 2b. Molten resin flows can be improved more by adjusting the size of the reserving portion 33.

In order to prevent a burning of the rotatble ring 5, molten resin is leaked into sliding gaps between the rotatable ring 5 and the main body 1 of the spiral die assembly as a lubricant, which is discharged by a discharging mechanism (not shown) having passages 6. The discharging mechanism has a needle valve for controlling a discharging rate and also has cooling fins around a discharging pipe, through which the cooled resin as the lubricant is discharged out of the spiral die assembly.

A width of the rotatable ring 5 can be adjusted any dimension from ahead of the beginning the spiral groove 3 to beyond the end of the spiral groove 3. In other words, the rotatable ring 5 with a minimum width of "a spiral pitch + a width of the groove" or with a maximum width of "the whole width of the spiral groove" can be arranged so as to face the spiral groove 3, so that optimum setting requirements can be attained.

In order to lubricate sliding gaps between the rotatable ring 5 and the main body of the spiral die assembly and in order to prevent foreign materials from flowing into the lubricant, controlled and leaked molten resin is guided as the lubricant into a annular groove formed on sliding surfaces of the main body 1 of the spiral die facing the outer peripheral surface of the rotatable ring 5 and portions of both sides of the gear teeth 5a and finally discharged out of the spiral die assembly.

Hereinafter extruding examples, in which parameters are varied, are explained.

The spiral die by the present invention is fitted to an extruder and polypropylene inflation films are formed.

The extruder is specified as follows: Outer diameter of screw: D = 50mm, effective length of screw: L = 1433mm, UD = 28 flight pitch (fixed) = 50mm, screw compression ratio: 3.8, outlet diameter of spiral die = 155mm, inner diameter of air ring = 300mm, and a cooling ring, stabilizing plates, pinch rollers and product winding rollers are arranged in the extruder.

### Extrusion Test 1

Inflation material: polypropylene resin, extruder temperature: 200°C, head temperature: 200°C, die temperature: 200°C, extruding rate: 33kg/hr and receiving rate: 30m/min. Inflation films with a width of 320mm and a thickness of 30µm are stably obtained by employing the spiral die illustrated in FIGs.1A and 1B.

### Extruding Condition 1A

Inflation films are formed without rotating the rotatable ring 5. Film thickness is adjusted after inflated film is stabilized.

### Extruding Conditions 1B to 4B

Inflation films are formed as the rotatable ring 5 being rotated according to TAB.1.

**TAB.1**

| | Rotational Direction | RPM | Seconds/1 Rotation |
|---|---|---|---|
| 1B | Clockwise | 0.4 | 150 |
| 2B | Clockwise | 0.8 | 75 |
| 3B | Counterclockwise | 0.4 | 150 |
| 4B | Counterclockwise | 0.8 | 75 |

| | | | |
|---|---|---|---|
| Note: 1) Clockwise direction corresponds to a spiral winding direction of the spiral die. 2) Counterclockwise direction corresponds to a reverse winding direction of the spiral of the spiral die. | | | |

### Extrusion Test 2

15 kg of polypropylene resin mixed with 1% of a pigment (hereinafter referred as "colored material"), is prepared. After 5kg of the colored polypropylene resin is extruded, Polypropylene resin with 0% of pigment (hereinafter referred as "non-colored material") is extruded until extruded resin shows no traces of the pigment. Consumed amounts of non-colored material are measured in respective cases with/without rotating the rotatable ring.

Compared results of the extrusion test 1 are shown in TAB.2.

**TAB.2**

| | Rotational Direction | RPM | Seconds/1 Rotation | Is weld Mark observed? | Thickness () | Fluctuation in thickness () |
|---|---|---|---|---|---|---|
| 1A | No Rotation | ---- | ---- | Yes | 28 | 9 |
| 1B | Clockwise | 0.4 | 150 | No | 27 | 6 |
| 2B | Clockwise | 0.8 | 75 | No | 27 | 6 |
| 3B | Counter-Clockwise | 0.4 | 150 | No | 27 | 5 |
| 4B | Counter-Clockwise | 0.8 | 75 | No | 27 | 4 |

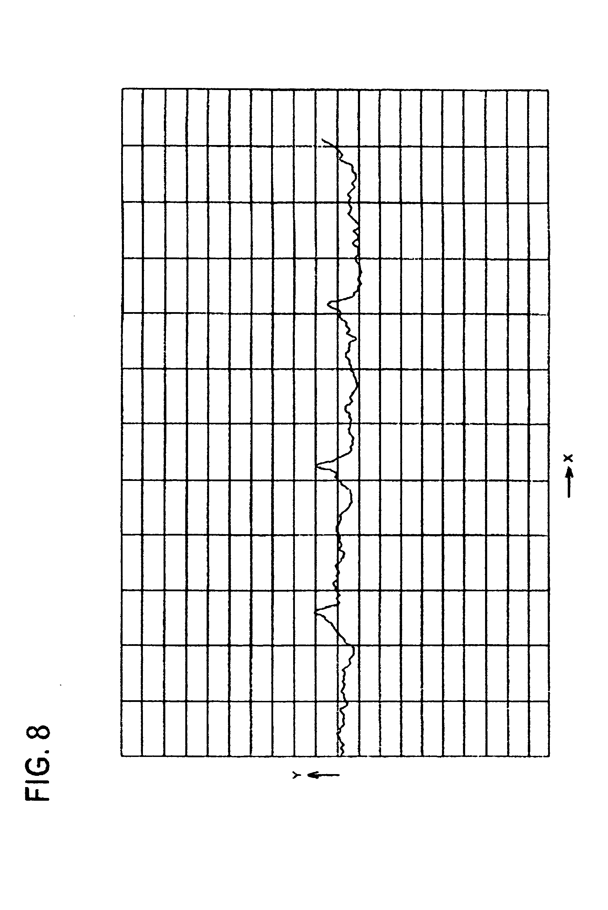

FIG.8 shows fluctuation in thickness of the film formed according to the extruding condition 1A.

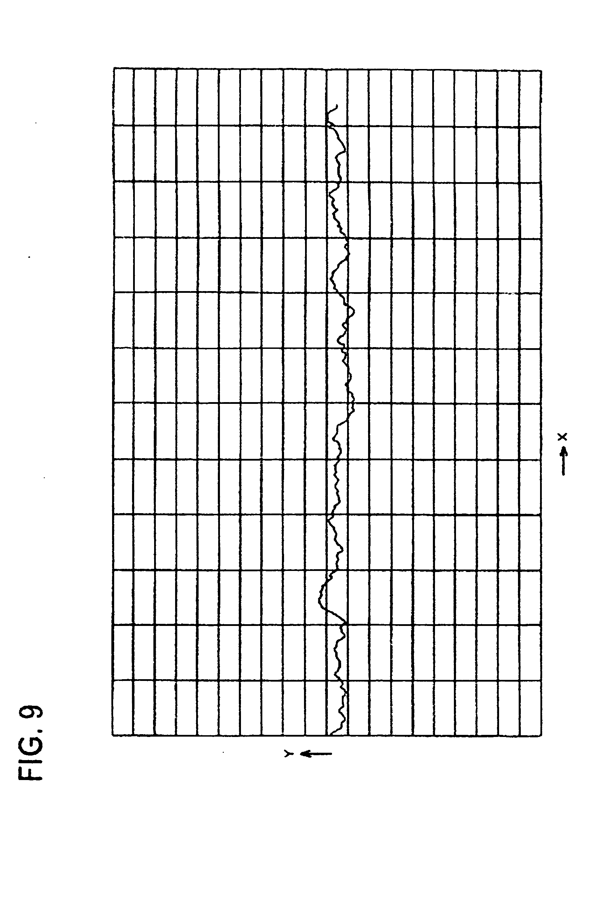

FIG.9 shows fluctuation in thickness of the film formed according to the extruding condition 1B.

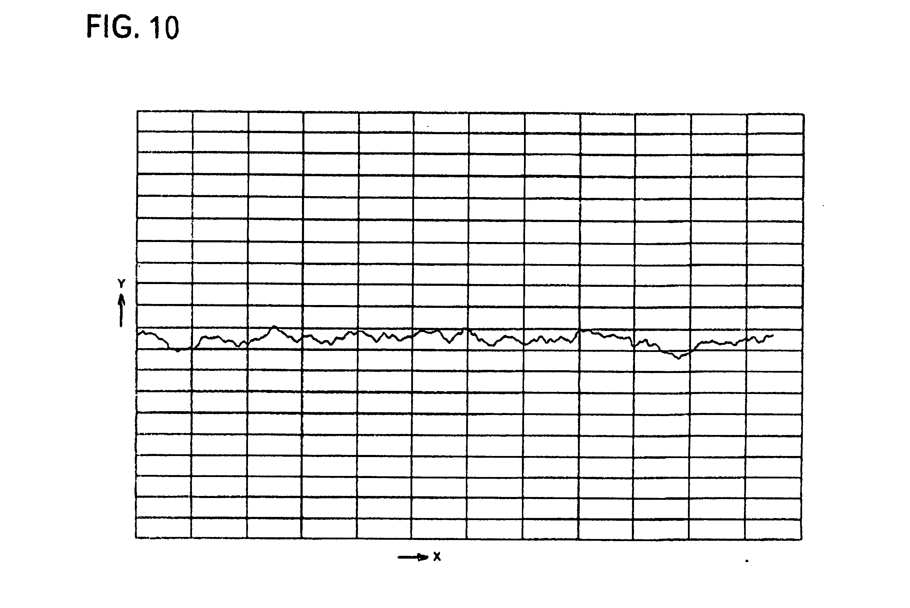

FIG.10 shows fluctuation in thickness of the film formed according to the extruding condition 3B.

In FIGs.8 to 10, x-coordinate represents a longitudinal direction of the film and y-coordinate represents fluctuation of film thickness (µ).

### Discussion on the results

1) As shown in TAB.2, weld marks are observed in a film extruded on the condition 1A, where the rotatable ring is not rotated. When the film is wound around a paper pipe, a wound status of the film is gradually deteriorated.
2) The appearance of the film formed with rotating the rotatable ring is obviously better than that of the film formed without rotating the rotatable ring.
3) As can be judged from TAB.2, the appearance of the wound film formed with rotating the rotatable ring at a faster rate is seems to be better than that of the film formed with rotating the rotatable ring at a slower rate.
4) As shown in FIG.8, fluctuation in thickness of the film is remarkable.
5) As shown in FIG.9, fluctuation in thickness of the film is reduced compared with fluctuation shown in FIG.8 due to the rotating effect of the ring clockwise.
6) As shown in FIG.10, fluctuation in thickness of the film is more reduced due to the rotating effect of the ring counterclockwise.

Compared results of the extrusion test 2 are shown in TAB.3.

**TAB.3**

| | Rotational Direction | RPM | Seconds/1 Rotation | Colored Resin (kg) | No-colored Resin Consumption | |
|---|---|---|---|---|---|---|
| | | | | | Amount (kg) | Time (min) |
| 1AA | No Rotation | ---- | ---- | 5 | 10 | 40 |
| 1BB | Clockwise | 0.8 | 75 | 5 | 5 | 20 |
| 2BB | Counter-Clockwise | 0.8 | 75 | 5 | 3.5 | 14 |

### Discussion on the results

1) When non-colored resin is extruded at a rate of 15kg/hr without rotating the rotatable ring, it takes ca. 40 minutes until traces of the colored resin are not observed.
2) When non-colored resin is extruded at a rate of 15kg/hr by rotating the rotatable ring clockwise, it takes ca. 20 minutes until traces of the colored resin are not observed.
3) When non-colored resin is extruded at a rate of 15kg/hr by rotating the rotatable ring counterclockwise, it takes ca. 14 minutes until traces of the colored resin are not observed.
4) When the rotatable ring is rotated, it takes about a half of time without rotating the rotatable ring.
5) When the rotatable ring is rotated counterclockwise, consumed amount of the uncolored resin is less than in the case when the rotatable ring is rotated clockwise.

### Evaluation of the effects by the present invention

### Evaluation 1

The stability of a formed film and appearance of the film wound around the paper pipe are observed on the same condition. At the same time, thickness of the formed film is measured continuously.

### Evaluation 2

The amount of the colored resin and the time to be required to consume the amount on the same condition are compared.

### Evaluated Results

### Evaluated Result 1

Effects by rotating the rotatable ring are obvious, when results of the extrusion test 1 in TAB.2 and in FIGs.8 to 10 are compared.

### Evaluation Result 2

The results of the extrusion test 2 obviously indicate good effects attained by rotating the rotatable ring for exchanging resin color in the extruder, and the effects by rotating the rotatable ring in a reverse direction to a wound direction of the spiral of the spiral die.

As explained above, a homogeneous pipe body, an inflation film with/without drawing and a functional film can be obtained by dispersing molten resin homogeneously when the spiral die assembly by the present invention is employed, and a spiral die assembly capable of being applied to various molten resins and extruding conditions can be obtained.

## Claims

1. A spiral die assembly comprising:
a main body (1) of said spiral die assembly;
a mandrel (2) having a spiral groove (3) around its outer surface inserted in the inside of said main body (1); **characterised by**
a rotatable ring (5) having a desired width fitted along the outer surface of said spiral groove (3) and fitted in a portion of a die cylinder which forms the inner surface of said main body (1) in a range corresponding to both ends of said spiral groove (3).

2. The spiral die assembly according to claim 1, **characterised by** sliding gaps between said rotatable ring (5) and said main body (1) in which molten resin is leaked into in order to function as a lubricant.

3. The spiral die assembly according to claim 2, **characterised by** a discharging mechanism having passages (6) and a needle valve for controlling amount of the molten resin to be discharged out of said spiral die assembly via said passages (6).

4. The spiral die assembly according to one of the preceding claims, **characterised in that** said rotatable ring (5) is controlled to rotate at a rate less than 60 rpm.

5. The spiral die assembly according to one of the preceding claims, **characterised in that** the inner surface (5b) of said rotatable ring (5) is finished so as to have a mirror grade in a range between 0.1S and 6.3S by the Japanese Industrial Standard 0601-1976, a satin finishing with a depth range between 4µm and 150µm or a tooth formed surface.

## Patentansprüche

1. Spiraldüse, umfassend
einen Hauptkörper (1) der Spiraldüse;
einen Aufziehdorn (2), der eine spiralförmige Rille (3) um seine Außenfläche aufweist und ins Innere des Hauptkörpers (1) eingesetzt ist; **gekennzeichnet durch**
einen drehbaren Ring (5), der eine gewünschte Breite aufweist und entlang der Außenfläche der spiralförmigen Rille (3) angebracht ist und in einen Abschnitt eines Formzylinders eingesetzt ist, der in einem Bereich, welcher beiden Enden der spiralförmigen Rille (3) entspricht, die Innenfläche des Hauptkörpers (1) bildet.

2. Spiraldüse nach Anspruch 1, **gekennzeichnet durch**
Gleitzwischenräume zwischen dem drehbaren Ring (5) und dem Hauptkörper (1), in die geschmolzenes Harz geleitet wird, um als ein Schmiermittel zu wirken.

3. Spiraldüse nach Anspruch 2, **gekennzeichnet durch**
einen Ablaßmechanismus, der Durchgänge (6) und ein Nadelventil zum Steuern der Menge des geschmolzenen Harzes, die über die Durchgänge (6) aus der Spiraldüse abgelassen werden soll, aufweist.

4. Spiraldüse nach einem der vorhergehenden Ansprüche, **dadurch gekennzeichnet, daß** der drehbare Ring (5) so gesteuert wird, daß er sich mit einer Geschwindigkeit von weniger als 60 U/min dreht.

5. Spiraldüse nach einem der vorhergehenden Ansprüche, **dadurch gekennzeichnet, daß** die Innenfläche (5b) des drehbaren Rings (5) so bearbeitet ist, daß sie einen Spiegelgrad in einem Bereich zwischen 0,1 S und 6,3 S nach dem japanischen industriellen Standard, eine Glättungsbearbeitung mit einem Tiefenbereich zwischen 4 µm und 150 µm oder eine zahnförmige Oberfläche aufweist.

## Revendications

1. Filière en spirale comprenant :
un corps principal (1) de ladite filière en spirale ;
un mandrin (2), pourvu à sa surface externe d'une rainure hélicoïdale (3), et inséré à l'intérieur du dit corps principal (1) ; **caractérisée par**
une bague mobile en rotation (5) de largeur souhaitée montée le long de la surface extérieure de ladite rainure hélicoïdale (3) et montée dans une partie d'un cylindre de filière qui forme la surface interne du dit corps principal (1) sur une distance correspondant aux deux extrémités de ladite rainure hélicoïdale (3).

2. Filière hélicoïdale selon la revendication 1 **caractérisée par**
des intervalles glissants entre ladite bague mobile en rotation (5) et ledit corps principal (1) dans lesquels s'écoule de la résine fondue jouant le rôle d'un lubrifiant.

3. Filière hélicoïdale selon la revendication 2 **caractérisée par**
un mécanisme d'évacuation muni de passages (6) et d'un robinet à pointeau pour contrôler la quantité de résine fondue à évacuer de ladite filière en spirale via lesdits passages (6).

4. Filière en spirale selon l'une des revendications précédentes **caractérisée en ce que** ladite bague mobile en rotation (5) est commandée pour tourner à une vitesse inférieure à 60 tr/min.

5. Filière en spirale selon l'une des revendications précédentes
**caractérisée en ce que** la surface interne (5b) de ladite bague mobile en rotation (5) a une finition de surface de type miroir de rugosité comprise entre O,1S et 6,3S selon la norme japonaise 0601-1976, ou une finition satinée dont la profondeur des aspérités est comprise entre 4 µm et 150 µm ou présente une surface conformée à dents ou à stries.
